# EUROPÄISCHE PATENTSCHRIFT

(11) **EP 3 497 266 B1**
(45) Veröffentlichungstag und Bekanntmachung des Hinweises auf die Patenterteilung: **21.07.2021**
(21) Anmeldenummer: 17749467.1
(22) Anmeldetag: 08.08.2017
(51) Int. Cl.: C25B 1/46, C25B 15/08, C02F 1/461, C02F 1/467, C02F 101/30, C02F 101/32, C02F 101/36, C02F 103/38

(54) **VERFAHREN ZUR ELEKTROCHEMISCHEN REINIGUNG VON CHLORID-HALTIGEN PROZESSLÖSUNGEN**
PROCESS FOR THE ELECTROCHEMICAL PURIFICATION OF CHLORIDE CONTAINING PROCESS SOLUTIONS
PROCEDE DE NETTOYAGE ELECTROCHIMIQUE DE SOLUTIONS DE PROCESSUS CONTENANT DU CHLORURE

(30) Priorität: 10.08.2016 EP 16183517
(43) Veröffentlichungstag der Anmeldung: 19.06.2019
(73) Patentinhaber: Covestro Intellectual Property GmbH & Co. KG, 51373 Leverkusen (DE)
(72) Erfinder: BULAN, Andreas, 40764 Langenfeld (DE); WEBER, Rainer, 51519 Odenthal (DE); MUDDEMANN, Thorben, 51061 Köln (DE)
(74) Vertreter: Levpat
(86) Internationale Anmeldenummer: PCT/EP2017/070088
(87) Internationale Veröffentlichungsnummer: WO 2018/029200

(56) Entgegenhaltungen:
- US-A1- 2010 206 744
- US-A1- 2011 284 391
- ELISABETTA PETRUCCI ET AL: "Anodic oxidation of a simulated effluent containing Reactive Blue 19 on a boron-doped diamond electrode", CHEMICAL ENGINEERING JOURNAL, ELSEVIER SEQUOIA, LAUSANNE, CH, Bd. 174, Nr. 2, 14. September 2011 (2011-09-14), Seiten 612-618, XP028319398, ISSN: 1385-8947, DOI: 10.1016/J.CEJ.2011.09.074

## Beschreibung

Die Erfindung betrifft ein Verfahren zur elektrochemischen Entfernung von organischen Verbindungen aus Chlorid-haltigen wässrigen Prozesslösungen, bei dem die Oxidation der organischen Verunreinigungen anodisch erfolgt, ohne dabei Chlor in der Oxidationsstufe Null oder größer als Null zu erzeugen.

Die in vielen chemischen Prozessen entstehenden Alkalichlorid-haltigen Prozesslösungen sind durch die in den Lösungen noch vorhandenen Verunreinigungen mit organischen chemischen Verbindungen, nachfolgend auch kurz organische Verunreinigungen genannt, nicht ohne Reinigung weiter zu verarbeiten oder zu entsorgen. Zum einen aufgrund der möglichen Umweltgefährdung durch die Verunreinigungen, zum anderen aufgrund des negativen Einflusses der Verunreinigungen auf die nachfolgenden Prozesse zur Aufarbeitung oder zur Wiederverwertung , z.B. der Nutzung einer Natriumchlorid-haltigen Lösung in der Chlor-Alkali-Elektrolyse zur Wiedergewinnung von Chlor und Natronlauge als Produktionsgrundstoffe. Hier kann durch die organischen Verunreinigungen eine Erhöhung der Zellspannung (erhöhter Energieverbrauch) erfolgen und eine Schädigung der Ionenaustauschermembran der Elektrolysezelle.

Bei der Herstellung von Polycarbonaten hat sich das Phasengrenzflächenverfahren, auch als Zweiphasengrenzflächenverfahren bezeichnet, seit vielen Jahren bewährt. Das Verfahren ermöglicht die Herstellung von thermoplastischen Polycarbonaten in einer Reihe von Einsatzgebieten wie z.B. für Datenträger (CD, DVD), für optische Anwendungen oder für medizinische Anwendungen.

Häufig werden als wichtige Qualitätsmerkmale für das Polycarbonat eine gute Thermostabilität und eine geringe Vergilbung beschrieben. Wenig Beachtung fand bisher die Qualität des bei der Herstellung von Polycarbonaten anfallenden Prozesswassers. Insbesondere die Belastung des Prozesswassers mit Resten organischer Verunreinigungen, z.B. Phenolresten ist dabei von Bedeutung für eine eventuelle weitere Behandlung des Prozesswassers z.B. durch eine Kläranlage oder durch eine Ozonolyse zur Oxidation der organischen Verunreinigungen. Es gibt eine Reihe von Publikationen, in denen aber überwiegend Methoden zur nachträglichen Prozesswasserbehandlung beschrieben werden, mit dem Ziel, die Belastung an phenolischen Komponenten zu reduzieren - siehe z.B.: JP 08 245 780 A (Idemitsu); DE 19 510 063 A1 (Bayer); JP 03 292 340 A (Teijin); JP 03 292 341 A (Teijin); JP 02 147 628 A (Teijin).

Bei diesen bekannten Verfahren macht jedoch ein hoher Restgehalt an Bisphenolen oder Phenolen - im Folgenden auch als Restphenolgehalt bezeichnet - im Prozesswasser dieser Prozesse, welcher die Umwelt belasten kann und die Klärwerke besonders belastet, eine aufwendige Reinigung erforderlich.

Üblicherweise wird ein solches Natriumchlorid-haltiges Prozesswasser von organischen Lösungsmitteln und organischen Verunreinigungen befreit und muss dann entsorgt werden.

Bekannt ist aber auch, dass die Vorreinigung der Natriumchlorid-haltigen Abwässer gemäß der EP 1 200 359 B1 (WO 2000/078682 A1) oder US-A 6,340,736 durch Ozonolyse erfolgen kann und dann zum Einsatz bei der Natriumchlorid-Elektrolyse geeignet ist. Nachteil der Ozonolyse ist, dass dieses Verfahren sehr energie- und kostenintensiv ist.

Gemäß der EP 541 114 A2 wird ein Natriumchlorid-haltiger Prozesswasserstrom bis zur vollständigen Entfernung des Wassers eingedampft und das zurückbleibende Salz mit den organischen Verunreinigungen einer thermischen Behandlung unterzogen, wodurch die organischen Bestandteile zersetzt werden. Besonders bevorzugt ist dabei der Einsatz von Infrarotstrahlung. Nachteil des Verfahrens ist, dass das Wasser vollständig verdampft werden muss, so dass das Verfahren aufgrund des hohen Energieverbrauchs nicht wirtschaftlich durchführbar ist.

Gemäß der WO 03/070639 A1 wird Prozesswasser aus einer Polycarbonatproduktion durch Extraktion mit Methylenchlorid gereinigt und dann einer Natriumchlorid-Elektrolyse zugeführt.

Nachteile der bekannten Aufarbeitungsverfahren sind die technisch aufwendige Prozessführung mit insgesamt vier Stufen, die einen erhöhten apparativen Aufwand bedeutet, die Verwendung von Lösemitteln, die aufgearbeitet werden müssen, was weiteren technischen Aufwand nach sich zieht und letztlich der hohe Energieeinsatz für die Anwendung der Aufarbeitung.

Die nach dem Stand der Technik bekannten Reinigungsverfahren weisen eine Reihe von Nachteilen auf.

In der Praxis erfolgt bei den aus dem Stand der Technik bekannten Verfahren die Reinigung der Alkalichlorid-haltigen Lösung durch Strippen der Lösung mit Wasserdampf und nachfolgender Behandlung mit Aktivkohle, ganz besonders bevorzugt erfolgt die Reinigung nach Einstellung der Alkalichlorid-haltigen Lösung auf einen pH-Wert kleiner oder gleich 8, durch Strippen mit Wasserdampf und nachfolgender Behandlung mit Aktivkohle. Die nach dem Stand der Technik bekannten Reinigungsverfahren von kontaminierten Alkalichlorid haltigen wässrigen Lösungen durch Verwendung von Adsorbermaterial wie Aktivkohle haben den Nachteil, dass die Aktivkohle regelmäßig ausgetauscht und aufgearbeitet werden muss. Weiterhin muss der Gehalt an organischen Verunreinigungen im vereinigten Prozesswasser ständig kontrolliert werden, da die Adsorbermaterialien eine begrenzte Aufnahmekapazität haben, und die Nutzung der gereinigten Lösung in nachfolgender konventioneller Natriumchlorid-Elektrolyse zu ermöglichen, was einen weiteren Aufwand bedeutet.

Außer den vorgenannten Methoden zur Behandlung von Prozesswasser ist noch die Behandlung mit Ozon bekannt. Die Prozesswasserbehandlung mit Ozon ist mindestens ebenso aufwändig wie die vorgenannten Reinigungsverfahren, da die Ozon-Herstellung energie- und kostenintensiv ist, da außer dem Ozonisator, der Bereitstellung und des Einsatzes von Sauerstoff und der letztendlich bescheidenen Ausbeute an Ozon noch ein zusätzlicher Apparat zur Nachbehandlung des Prozesswassers notwendig ist.

Aufgabe der Erfindung ist die Entfernung von organischen chemischen Verunreinigungen aus Chlorid-Ionen enthaltenden wässrigen Prozesslösungen, die auf einfachere Art, z.B. ohne Verwendung von Absorptionsmitteln, zum Beispiel Aktivkohle, oder durch andere energetisch aufwendige Reinigungsverfahren wie oben dargestellt durchgeführt werden kann. Die Aufarbeitung der Adsorptionsmittel oder die Herstellung von Ozon würde dabei entfallen. Insbesondere ist Aufgabe der Erfindung die Reinigung solcher Lösungen, die einen Gesamtgehalt von organischen Verbindungen (TOC) von bis zu 10 g/kg und mehr haben, zu ermöglichen. Weiterhin soll insbesondere die Entstehung von organischen chlorierten Verbindungen aus einer etwaigen Reaktion von Chlor mit den in der Lösung vorliegenden organischen chemischen Verunreinigungen vermieden werden.

Es wurde daher nach einer einfachen und effizienten Alternative gesucht, mit der die Chlorid-haltigen Prozesslösungen gereinigt werden kann, so dass eine weitere Nutzung oder Verarbeitung des Alkalichlorid haltigen Prozesswassers möglichst störungsfrei möglich wird. Eine Nutzung des gereinigten Alkalichlorid haltigen Prozesswassers sollte z.B. direkt in der Chlor-Alkali-Elektrolyse erfolgen können. Eine weitere Verarbeitung des gereinigten Alkalichlorid haltigen Prozesswassers kann die Konzentrierung der Alkali-chloridhaltigen Lösungen mittels im Prinzip bekannten Membranverfahren wie Osmotischer Destillation, Membrandestillation, Nanofiltration, Umkehrosmose oder einer thermischen Eindampfung sein. Eine besondere Aufgabe der Erfindung ist es, ein Reinigungsverfahren für wässrige Chlorid-haltige Prozesslösungen bereitzustellen, das ausgeht von Chlorid-haltigen Lösungen, mit schwankender Konzentration an organischchemischen Verunreinigungen und zeitlich unterschiedlich großen anfallenden Volumenströmen und ermöglicht diese kontinuierlich und effizient zu reinigen. Unter großen Volumenströmen werden insbesondere solche verstanden, die mehr als 0,1 m³/h betragen.

Die Aufgabe wird erfindungsgemäß dadurch gelöst, dass ein Verfahren zur elektrochemischen Entfernung von organischen Verbindungen aus Chlorid-haltigen wässrigen Prozesslösungen bereitgestellt wird, bei dem die Oxidation der organischen Verunreinigungen anodisch in Gegenwart einer Bor-dotierten Diamantelektrode erfolgt, ohne dabei Chlor in der Oxidationsstufe Null oder größer als Null zu erzeugen.

Die allgemeine Anwendung von bordotierten Diamantelektroden bei der elektrochemischen Desinfektion von Wasser ist grundsätzlich bekannt.

In der Druckschrift US 2010/0206744 A1 wird ein elektrochemischer Prozess als Aufreinigungsverfahren für Sole, enthaltend organische Verunreinigungen, beschrieben. In dem Prozess wird durch Anlegen einer ausreichenden elektrischen Spannung der Gehalt an organischen Verunreinigungen, bevorzugt bei einem pH-Wert von pH 7 bis pH 10, reduziert.

Petrucci et al. (Chemical Engineering Journal, 174 (2011), 612-618) berichten über die elektrochemische Oxidation von organischen Farbstoffen, COD und TOC aus Abwasser von Färbeprozessen. Die Oxidation findet mit Hilfe einer Bor-dotierten Diamantelektrode statt. Dabei werden die Experimente explizit bei solchen Bedingungen durchgeführt, die eine Chlorat- oder Hypochlorit-Bildung begünstigen, um den Farbstoff aus dem Abwasser zu entfärben.

Lacasa et. al. beschreibt ein Verfahren zur Desinfizierung von mit Mikroben belastetem salzhaltigem Prozesswasser. Hierbei führt sowohl eine Erhöhung der Chloridkonzentration, als auch eine Steigerung der Stromdichte zu verstärkter Chlorbildung. Der pH des Elektrolyten betrug dabei 8 - 9 (siehe: E. Lacasa, E. Tsolaki, Z. Sbokou, M. Rodrigo, D. Mantazavinos und E. Diamadopoulos, "Electrochemical disinfection of simulated ballast water on conductive diamond electrodes" Chem. Eng. Journal, Bd. 223, pp. 516-523, 2013). Die Verfasser bevorzugen die aktive Entwicklung von Chlor bei der Desinfektion mittels einer bordotierten Diamantelektrode um den Effekt der Desinfektion zu erhöhen.

Degaki et al. (A. H. Degaki, G. F. Pereira und R. C. Rocha-Filho, "Effect of Specific Active Chlorine Species," Electrocatalysis, Bd. 5, pp. 8 - 15, 201) beschreibt den Einfluss von Natriumchlorid (NaCl) in wässriger Lösung auf den Abbau organischer Verbindungen bei der Anwendung von bordotierten Diamantelektroden und konnte eine deutliche Beschleunigung des Abbaus durch Zusatz geringe Mengen NaCl und der Bildung von aktivem Chlor feststellen.

Nach dem Stand der Technik wird die Bildung von Chlor oder Hypochlorit bei der elektrolytischen Reinigung mittels bordotierten Diamantelektroden (BDD) bewusst zur Reinigung genutzt, da hierdurch die Reinigungswirkung im Hinblick auf den Aspekt der Desinfektion verbessert wird. Hierbei wird an BDD-Elektroden Chlor oder Chlor in der Oxidationsstufe größer als Null erzeugt. Das Verfahren wird auch angewandt zur Entfernung von Cynanid aus Abwässern, wobei gezielt geringe Mengen Chlorid dem Prozesswasser zugesetzt wird. Dieses Chlorid wird an der BDD Elektrode zu Hypochlorit oxidiert und reagieren dann mit dem Cyanid (Perret et al., Diamond and Related Materials 8 (1999), 820-823), Elektrochemical Behavior of Synthetic Diamond Thin Film Electrodes).

In Gegenwart von Chlor, das bei der bekannten Desinfektion von Abwasser mittels BDD-Elektroden entsteht, bilden sich leider in gewissen Mengen chlorierte organische Verbindungen die zum Teil recht toxisch sind. Für die Aufarbeitung von vorgereinigten Alkalichlorid haltigen wässrigen Lösungen zur Gewinnung von Chlor und Natronlauge, beispielsweise mithilfe einer konventionellen Alkalichlorid-Membranelektrolyse, sind zudem Reste von chlorierten organischen Verbindungen in der Alkalichlorid haltigen wässrigen Lösung fatal, da diese die Ionenaustauscher Membran, die bei der Membranelektrolyse üblicherweise verwendet wird, schädigen können.

Weiterhin können auch die zur Entfernung von Calcium- oder Magnesiumionen eingesetzten Ionenaustauscherharze beschädigt werden.

Durch weitere Chlorierung der Verunreinigungen mit dem an der Anode gebildetes Chlorgas können gasförmige kurzkettige chlorierte Verbindungen entstehen, die mit dem Chlor aus der Chlor-Alkali-Elektrolysezelle befördert werden und dabei die Qualität des Chlor für Folgeprozesse beeinträchtigen oder zu Störungen in der Chlor-Trocknung oder Chlor-Verdichtung führen.

Im Stand der Technik findet sich kein Hinweis darauf, dass mit einer mit Bor dotierten Diamantelektrode, nachfolgend BDD genannt, organische Verunreinigungen aus einer alkalichloridhaltigen Lösung entfernt werden können, ohne dass dabei Chlor in der Oxidationsstufe Null oder größer als Null zu erzeugt wird.

Die üblicherweise bei der elektrochemischen Behandlung von Chlorid-haltigen und organische Verbindungen enthaltenden wässrigen Prozesslösungen nach dem Stand der Technik auftretende Chlorentwicklung führt zu unerwünschter Chlorierung der organischen Verunreinigungen und damit nicht zum gewünschten Reinigungseffekt, da chlorierte organische Verunreinigungen zum Teil toxisch sind und zum Teil noch schwerer zu entfernen sind als die nicht-chlorierten Verunreinigungen und da chlorierte organische Verunreinigungen nicht, unzureichend oder schwer in biologischen Kläranlagen abbaubar sind. Zudem erschweren chlorierte organische Verunreinigungen den Umgang mit dem Prozesswasser wegen der Toxizität dieser Verbindungen.

Überraschenderweise wurde gefunden, dass die Bildung von Chlor der Oxidationsstufe Null oder größer als Null vermieden wird, wenn der pH Wert der Alkalichlorid-haltigen Prozesslösung mindestens pH 11 ist. Das Potenzial der BDD-Anode beträgt dabei mehr als 2,5V, gemessen gegen die reverse Wasserstoffelektrode (RHE) bei einer Stromdichte von 1 bis 10 kA/m². Gemäß dem Stand der Technik müsste aus einer alkalichlorid-haltigen Lösung bei einem Anodenpotenzial von mehr als 1,36 V zwangsläufig Chlor der Oxidationsstufe Null oder größer als Null erzeugt werden. Es wurde nun festgestellt, dass selbst bei einem Anodenpotenzial von 2,8V nach dem neuen Verfahren kein Chlor der Oxidationsstufe Null oder größer als Null entwickelt wird. Das Verfahren wird folglich insbesondere so betrieben, dass kein Chlor der Oxidationsstufe Null oder größer als Null bei der elektrochemischen Reinigung entwickelt wird. Dies bedeutet, dass der Gesamtgehalt an Chlor der Oxidationsstufe Null oder größer als Null in der alkalichlorid-haltigen Lösung höchstens 300 mg/l, bevorzugt höchstens 100 mg/l, besonders bevorzugt höchstens 50 mg/l beträgt. Wie oben beschrieben wurde vermeidet dies die Bildung von unerwünschten chlorierten organischen Verbindungen, welche eine nachgeordnete Elektrolyseeinrichtung schädigen können. Vermutlicherweise werden bei der Anwendung des erfindungsgemäßen Verfahrens anstelle von Chlorgas OH-Radikale gebildet, die die organischen Verunreinigungen abbauen.

Gegenstand der Erfindung ist ein Verfahren zur elektrochemischen Reinigung von mit organischen chemischen Verbindungen verunreinigten chlorid-haltigen wässrigen Prozesslösungen unter Verwendung einer Bor-dotierten Diamantelektrode, dadurch gekennzeichnet, dass die Reinigung bei einer Stromdichte von 1 bis 10 kA/m² mit einer Bor-dotierten Diamantelektrode bei einem Potenzial von mehr als 2,5V gemessen gegen die reverse Wasserstoffelektrode (RHE) und einem pH -Wert der Prozesslösung von mindestens pH 11, in der Anodenzone einer Elektrolysezelle bis zu einem vorgegebenen Gesamtgehalt an organischen chemischen Verbindungen (TOC) erfolgt.

Mit dem erfindungsgemäßen Verfahren kann der Gehalt an organischen Verunreinigungen erheblich herabgesetzt werden.
Ein bevorzugtes Verfahren ist daher dadurch gekennzeichnet, dass die Reinigung bis zu einem Gesamtgehalt an organischen chemischen Verbindungen (TOC) von höchstens 500 mg/kg, bevorzugt höchstens 100 mg/kg, insbesondere bevorzugt höchstens 20 mg/kg, besonders bevorzugt höchstens 10 mg/kg erfolgt.

Die Konzentration der Chlorid-Ionen in der Alkalichlorid enthaltenden Prozesslösung beträgt in einer bevorzugten Ausführung der Erfindung zu Beginn der Reinigung bis zu 20 Gew.-% , bevorzugt bis zu 15 Gew.-%.

Zur Durchführung des erfindungsgemäßen Verfahrens können handelsübliche Bor-dotierte Diamantelektroden eingesetzt werden, die als Anode geschaltet werden. Im Betrieb als Anode erzeugt die BDD-Anode vermutlicherweise OH-Radikale.

Diamantelektroden, die grundsätzlich für das neue Verfahren besonders geeignet sind, sind dadurch gekennzeichnet, dass eine elektrisch leitfähige Diamantschicht, die Bor-dotiert sein kann, auf einem geeigneten Trägermaterial aufgebracht wird. Das meist angewandte Verfahren zur Herstellung solcher Elektroden ist die "Hot filament chemical vapor deposition"-Technik (HFCVD), um aktive und stabile BDD-Elektroden herzustellen. Bei vermindertem Druck (Größenordnung 10 mbar) und hoher lokaler Temperatur (> 2000 °C), die durch Heizdrähte erzeugt wird, wird eine Kohlenstoffquelle (z.B. Methan) und Wasserstoff eingesetzt. Unter diesen Prozessbedingungen gebildete Wasserstoffradikale ermöglichen die Bildung von Methylradikalen, welche sich letztendlich als Diamant auf einem Trägermaterial abscheiden (Abbildung 2.13). [M. Rüffer, "Diamond electrodes - properties, fabrication, applications," Vortrag auf ACHEMA 2015, Frankfurt am Main, 2015.] Für die elektrochemische Verwendung bedarf es leitfähiger Elektroden, weshalb die Diamantschicht im Herstellungsprozess mit Bor dotiert wird. Für die Bordotierung wird auf geringe Konzentrationen an Diborane, Trimethylboran, Bortrioxid oder Borate zurückgegriffen. [L. Pan und D. Kanja, Diamond: Electronic Properties and Applications, Kluwer AcademicPublishers: Boston, 1995.] Gängig ist auch, einen zusätzlichen Wasserstoffgasstrom durch eine Methanol/Bortrioxid Lösung (mit definiertem C/B-Verhältnis) zu führen. E. Brillas und C. A. Martinez-Huitle, Synthetic Diamond Films: Preparation, Electrochemistry, Characterization and Applications, John Wiley & Sons, 2001].

Das erfindungsgemäße Verfahren kann bevorzugt mit BDD Elektroden durchgeführt werden, bei denen die Bordotierte Diamantschicht auf verschiedenen Basismaterialien aufgebracht ist. So können unabhängig voneinander Titan, Silizium oder Niob als Trägermaterial eingesetzt werden. Bevorzugtes Trägermaterial ist Niob. Auch andere Trägermaterialen, auf dem die Diamantschicht haftet und eine dichte Schicht bildet, können grundsätzlich eingesetzt werden.
Der elektrisch leitende Träger zur Herstellung der BDD kann grundsätzlich ein Netz, Vlies, Schaum, Gewebe, Geflecht oder Streckmetall sein. Bevorzugt wird ein Träger in Form eines Streckmetalls eingesetzt. Der Träger kann einlagig oder mehrlagig sein. Ein mehrlagiger Träger kann aus zwei oder mehreren übereinander angeordneten Netzen, Vliesen, Schäumen, Geweben, Geflechten oder Streckmetallen aufgebaut sein. Die Netze, Vliese, Schäume, Gewebe, Geflechte oder Streckmetalle können dabei unterschiedlich sein. Sie können z.B. unterschiedlich dick oder unterschiedlich porös sein oder eine unterschiedliche Maschenweite aufweisen. Zwei oder mehrere Netze, Vliese, Schäume, Gewebe, Geflechte oder Streckmetalle können z.B. durch Sintern oder Schweißen miteinander verbunden sein.

In einem bevorzugten Verfahren wird eine Bor-dotierte Diamantelektrode eingesetzt, die auf einem Träger basierend auf mindestens einem Material ausgewählt aus der Reihe: Tantal, Silizium und Niob, bevorzugt Niob aufgebaut ist. Auf diesen Materialien haftet die Diamantschicht am besten.

Zur Erhöhung der chemischen Resistenz, insbesondere gegenüber Lauge wird besonders bevorzugt eine die Bor-dotierte Diamantelektrode verwendet, welche eine Mehrfachbeschichtung mit feinteiligem Diamant aufweist.

Besonders bevorzugt weist die Mehrfachbeschichtung der Bor-dotierten Diamantelektrode mit Diamant eine Mindestschichtdicke von 10 µm auf. Dies vermeidet die Korrosion des Trägermaterials unter der Diamantschicht bei Kontakt mit Lauge.

Das neue Reinigungsverfahren kann in handelsüblichen Elektrolysezellen mit den genannten BDD als Anode durchgeführt werden, wobei bevorzugt gut durchströmte Elektrolysezellen, insbesondere Zellen mit turbulent durchströmten Anodenhälften eingesetzt werden.

Prinzipiell besteht eine besonders für das neue Reinigungsverfahren geeignete Elektrolysezelle aus zwei Elektroden, einer Anode und einer Kathode, einem die Elektroden umgebenden Elektrodenraum sowie mindestens einem Elektrolyt. Dabei kann zwischen Anode und Kathode ein Separator eingesetzt werden, der die Elektrodenräume der Elektrolysezelle in eine Anoden- und eine Kathodenraum trennt. Als Separator kann eine Ionenaustauschermembran oder ein Diaphragma eingesetzt werden. Als Anode wird eine bordotierte Diamantelektrode (BDD) eingesetzt, als Kathode kann beispielweise ebenfalls eine gleichartige BDD als auch jede andere Kathode eingesetzt werden, die Wasserstoff entwickelt.

In einer besonderen Ausführungsform kann als Kathode auch eine Sauerstoff verzehrende Gasdiffusionselektrode eingesetzt werden, an der keine Wasserstoffentwicklung erfolgt. Wird beispielsweise eine Ionenaustauschermembran in der elektrolytischen Zelle für die Reinigung eingesetzt, kann sich der Elektrolyt im Anodenraum von dem im Kathodenraum unterscheiden. So kann an der Anode die zu reinigenden alkalichlorid-haltige Prozesslösung zugeführt werden und an der Kathode ein anderer Elektrolyt, wie z.B. eine Alkalihydroxid-Lösung wie beispielsweise Natronlauge. Die Konzentration des Katholyt kann systembedingt auf Werkstoffe, Temperaturen und benötigte Leitfähigkeit abgestimmt und optimiert werden. Im Falle der Verwendung einer Sauerstoffverzehrkathode auf der Kathodenseite in einer geteilten Zellen und dem Elektrolyten auf der Kathodenseite Natronlauge wird die Natronlauge kathodenseitig aufkonzentriert.

Wird eine Sauerstoffverzehrkathode eingesetzt, erzeugt diese mit Wasser und Sauerstoff Hydroxid-Ionen. Vorteil der Sauerstoffverzehrkathode ist die um bis zu 1 V niedrigere Zellspannung. Bei Einsatz einer Sauerstoffverzehrkathode, wie z.B. in der EP1728896A beschrieben, kann der Elektrolyt eine 4 bis 32 Gew.-%ige Natronlauge oder Kalilauge sein. Zum Betrieb der Sauerstoffverzehrkathode kann Luft oder reiner Sauerstoff eingesetzt werden.

Als Kathode kann alternativ auch eine Elektrode zur Wasserstoffentwicklung, z.B. bestehend aus Stahl oder Nickel eingesetzt werden (wie z.B. in DE 102007003554 beschrieben). Ebenfalls denkbar sind andere Arten von Kathoden wie sie in der Chlor-Alkali-Elektrolyse oder in der Wasserelektrolyse eingesetzt werden.

Das Alkalichlorid im Prozesswasser des neuen Reinigungsverfahrens kann beispielsweise als Natriumchlorid oder Kaliumchlorid vorliegen. Die wirtschaftlich größere Bedeutung hat das Natriumchlorid, das in einer nachgeschalteten Chlor-Alkali-Elektrolyse zu Natronlauge und Chlor umgesetzt wird. Prozesswasser mit anderen Chloriden sind dabei allerdings ebenfalls denkbar und dem neuen Verfahren grundsätzlich zugänglich.

Das erfindungsgemäße Verfahren wird bevorzugt so durchgeführt, dass der pH Wert der zu reinigenden Chlorid-haltigen wässrigen Lösung mindestens pH 11_ist und auch bei der Elektrolyse dieser pH-Wert nicht erreicht oder unterschritten wird. Mit dieser Maßnahme werden die Bildung von Chlor und die etwaige Bildung von chlorierten organischen Verbindungen sicher verhindert.

Die zu reinigende Chlorid-haltige wässrige Lösung kann in einem bevorzugten Verfahren einmal oder mehrmals durch die Anodenseite der elektrolytischen Zelle geleitet werden, insbesondere solange bis ein gewünschter Restwert an TOC erreicht ist.

Der der Gesamtgehalt an organisch chemischen Verunreinigungen (üblicherweise als TOC bezeichnet) der zu reinigenden wässrigen Lösung kann in dem neuen elektrolytischen Reinigungsverfahren mittels BDD mehr als 10.000 ppm (gemessen in mg/kg) betragen.

Für die Herstellung von Polymerprodukten typische Verunreinigungen wie Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (Bis-(hydroxyphenyl)-diisopropylbenzole, sowie deren alkylierte, kernalkylierte und kernhalogenierte Verbindungen., Oligocarbonate, tertiären Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium- / Tributylbenzylammonium- / Tetraethylammonium- hydroxid/-chlorid/- bromid/-hydrogen-sulfat/-tetrafluoroborat sowie die den Ammoniumverbindungen entsprechenden Phosphoniumverbindungen, oder andere organisch chemische Verbindungen wie Formiate, Aromaten, Aniline, Phenole, Alkylverbindungen wie Carbonsäuren, Ester, Alkohole, Aldehyde können im zu reinigenden Prozesswasser vorhanden sein und werden mithilfe des neuen elektrolytischen Reinigungsverfahrens abgebaut. Die Konzentration dieser Verunreinigungen kann dabei im Einzelnen mehr als 1.000 mg/kg betragen.

In einem bevorzugten Verfahren enthält das zu reinigende Prozesswasser als organisch chemische Verunreinigung organische Lösungsmittel, insbesondere ein oder mehrere aus der Reihe: aliphatische Kohlenwasserstoffe, insbesondere halogenierte aliphatische Kohlenwasserstoffe, insbesondere bevorzugt Dichlormethan, Trichlorethylen, 1,1,1-Trichlorethan, 1,1,2- Trichlorethan und deren Gemische oder aromatische Kohlenwasserstoffe, insbesondere Benzol, Toluol, m/p/o-Xylol oder aromatische Ether wie Anisol, halogenierte aromatische Kohlenwasserstoffe insbesondere Monochlorbenzol und Di-Chlorbenzol. Lösungsmittelreste sind typische Kontaminationen aus der Herstellung von Polymeren, insbesondere von Polycarbonaten oder Polyurethanen.

Das neue Verfahren findet folglich in einer besonders bevorzugten Ausführung Anwendung bei der kontinuierlichen Herstellung von Polycarbonat durch Reaktion von Bisphenolen und Phosgen in einem inerten Lösungsmittel oder Lösungsmittelgemisch in Gegenwart von Base(n) und Katalysator(en), in dem eine verbesserte Rückführung von Natriumchlorid aus den in der Grenzfläche anfallenden Natriumchlorid-haltigen Prozesswasserlösungen ohne eine aufwendige Reinigung nach pH-Einstellung auf einen pH kleiner oder gleich 8 und nach Behandlung mit Aktivkohle dadurch ermöglicht wird, dass die Prozesslösung nach der Reinigung mittels des neuen elektrochemischen Reinigungsverfahrens direkt einer elektrochemischen Oxidation des enthaltenen Natriumchlorids zu Chlor, Natronlauge und gegebenenfalls Wasserstoff erzielt werden kann, wobei das Chlor zur Herstellung des Phosgens rückgeführt werden kann.

Ein solches spezielles Verfahren ist aus der EP2096131A bekannt geworden, die ein Verfahren zur Herstellung von Polycarbonat nach dem Phasengrenzflächenverfahren beschreibt mit einer Verarbeitung mindestens eines Teils der dabei anfallenden Alkalichlorid-haltigen Lösung in einer nachgeschalteten Alkalichlorid-Elektrolyse. Nach diesem Stand der Technik wird die Alkalichlorid-haltigen Lösung von Lösungsmittelresten und gegebenenfalls Katalysatorresten insbesondere durch Strippen der Lösung mit Wasserdampf und Behandlung mit Adsorbentien, insbesondere mit Aktivkohle befreit. Insbesondere bei der Behandlung mit Adsorbentien weist die Alkalichlorid-haltige Lösung einen pH-Wert kleiner oder gleich 8 auf. Durch Anwendung des erfindungsgemäßen Verfahrens kann auf diese aufwendige Form der Reinigung verzichtet werden und die Prozesslösung direkt elektrochemisch gereinigt werden.

Das neue elektrochemische Reinigungsverfahren kann auch mit der im Prinzip bekannten Herstellung von Isocyanaten verbunden werden. Die EP2096102A beschreibt ein Verfahren zur Herstellung von Methylendiphenyldiisocyanat, nachfolgend MDI genannt, durch Phosgenierung der entsprechenden Polyamine der Diphenylmethanreihe. Die MDI-Synthese geschieht dabei üblicherweise in einem zweistufigen Prozess. Zunächst wird Anilin mit Formaldehyd zu einem Gemisch aus oligomeren und isomeren Methylendiphenyldiaminen MDA und Polymethylenpolyaminen, dem sogenannten Roh-MDA kondensiert. Dieses Roh-MDA wird anschließend in einem zweiten Schritt mit Phosgen in an sich bekannter Weise zu einem Gemisch der entsprechenden oligomeren und isomeren Methylendiphenyldiisocyanate und Polymethylenpolyphenylen-polyisocyanate, dem sogenannten Roh-MDI umgesetzt. Die kontinuierliche, diskontinuierliche oder halbkontinuierliche Herstellung von Polyaminen der Diphenylmethanreihe, im Folgenden auch kurz MDA genannt, ist in zahlreichen Patenten und Publikationen beschrieben (siehe z.B. H.J.Twitchett, Chem.Soc.Rev. 3(2), 209 (1974), M.V. Moore in: Kirk-Othmer Encycl. Chem. Technol., 3rd. Ed., New York,2, 338-348 (1978). Üblicherweise erfolgt die Herstellung von MDA durch Umsetzung von Anilin und Formaldehyd in Anwesenheit saurer Katalysatoren. Üblicherweise wird Salzsäure als saurer Katalysator eingesetzt, wobei der saure Katalysator gemäß dem Stand der Technik zum Ende des Prozesses und vor den abschließenden Aufarbeitungsschritten, beispielsweise der destillativen Entfernung von überschüssigem Anilin, durch Zusatz einer Base, typischerweise wässriger Natronlauge, neutralisiert und somit verbraucht wird. In der Regel erfolgt die Zugabe des Neutralisationsmittels derart, dass sich das erhaltene Neutralisationsgemisch in eine organische, die Polyamine der Diphenylmethanreihe und überschüssiges Anilin enthaltende Phase und eine wässrige Phase, welche neben Natriumchlorid noch Reste organischer Bestandteile enthält, auftrennen lässt. Die wässrige Phase wird in der Regel nach Entfernung der organischen Bestandteile als anorganisch belastetes Prozesswasser entsorgt. Auch all diese Herstellungsverfahren können mit dem neuen elektrochemische Reinigungsverfahren gekoppelt werden und bekannte aufwendige Reinigungsschritte ersetzen.

In einer weiteren bevorzugten Ausführung der Erfindung wird als Prozesslösung ein solches verwendet, das als organisch chemische Verunreinigung Katalysatorreste, insbesondere eine oder mehrere Verbindungen aus der Reihe: tertiären Amine, insbesondere Triethylamin, Tributylamin, Trioctylamin, N-Ethylpiperidin, N Methylpiperidin, N-i/n-Propylpiperidin; quartäre Ammoniumsalze wie Tetrabutylammonium-/Tributylbenzylammonium-/Tetraethylammoniumhydroxid/-chlorid/-bromid/-hydrogen-sulfat/-tetrafluoroborat; sowie die den Ammoniumverbindungen entsprechenden Phosphoniumverbindungen enthält.

Die Prozesslösung aus Polymerproduktion kann grundsätzlich auch zusätzliche Reste von Monomeren oder niedermolekularen Polymeren aufweisen. Besonders bevorzugt ist daher eine Variante des neuen Reinigungsverfahrens, in der die Prozesslösung als organisch chemische Verunreinigung eine oder mehrere Verbindungen aus der Reihe: Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'-Bis-(hydroxyphenyl)-diisopropylbenzole, sowie deren alkylierte, kernalkylierte und kernhalogenierte Verbindungen, enthält.

Das Reinigungsverfahren kann auch zur Reinigung von Alkalichlorid enthaltendem Prozesswasser aus der Herstellung anderer Basischemikalien dienen. Beispielsweise fallen bei der Herstellung von Kresolen als Vorprodukte für Pflanzenschutzmittel oder Pharmaka kresolhaltige und Alkalichlorid enthaltende Prozesswässer an die mit dem Reinigungsverfahren bevorzugt entfernt werden können.

Als Elektrolysezelle, die die BDD-Elektrode enthält können wie oben beschrieben verschiedene Formen von Zellkonstruktionen eingesetzt werden. So können geteilte als auch ungeteilte Zellen zum Einsatz gelangen. Der Abstand zwischen Kathode und Anode kann dabei von 0,01mm bis 20 mm betragen. Von der Prozesslösung berührtes Zellmaterial wie Zellhalbschalen oder Dichtungen bestehen insbesondere aus geeigneten beständigen Kunststoffen z.B. Polytetrafluorethylen (PTFE), Polyvinylidenfluorid (PVDF), Polypropylen oder Polyethylen oder Metallen wie z.B. Nickel oder Stahl.

Eine besonders bevorzugt beim neuen elektrolytischen Reinigungsverfahren einsetzbare mögliche Ausführungsform der Elektroysezelle kann wie folgt aufgebaut sein:
Als Anode kann eine BDD Elektrode in der Form eines Blechs, z.B. eine Elektrode, vertrieben unter der Bezeichnung DIACHEM®, der Fa. Condias verwendet werden oder eine Streckgitterelektrode der Fa. Diaccon (http://www.diaccon.de/de/produkte/elektroden.html) oder eine Elektrode, vertrieben unter der Bezeichnung NeoCoat® Elektroden (http://www.neocoat.ch/en/products/electrodes/bdd-me). Möglich ist die Überströmung einer planaren oder Streckgitter-Elektrode mit der zu reinigenden Prozesslösung, wie auch die Durchströmung einer Streckgitterelektrode.

Als Kathode kann besonders bevorzugt eine Sauerstoffverzehrkathode der Fa. Covestro, hergestellt gemäß EP1728896A eingesetzt werden.

Anoden- und Kathodenraum können zum Beispiel mit einer Ionenaustauschermembran getrennt werden, geeignet ist z.B. eine Kationen- oder Anionenaustauschermembrane sein. Als Kationenaustauschermembran kann beispielsweise eine der Fa. Chemours Typ N145 oder eine der Fa. Asahi Glass Flemion Typ F133.

Elektrolysezellen mit einer installierten Membranfläche von 10 cm² bis 40.000 cm² und mehr können im Produktionsmaßstab eingesetzt werden. Die Membranfläche entspricht dabei der Fläche der eingesetzten Elektrode.

Die Anordnung der Elektroden und der Membran kann besonders bevorzugt parallel erfolgen. Notwendige Rahmen und Zwischenrahmen zur Fixierung der Elektrodenabstände und der Membran können z.B. aus Polypropylen bestehen und werden auf den jeweiligen Elektrolyten abgestimmt.

Dichtungen werden ganz besonders bevorzugt aus expandiertem Polytetrafluorethylen (ePTFE z.B. Fa. Gore; Gore GR) eingesetzt.

Bei einer geteilten Zelle kann als Katholyt beispielsweise eine Natronlauge mit einer Konzentration von 4 bis 35 Gew.-% eingesetzt werden. Ebenfalls ist als Katholyt der Einsatz einer Alkalichlorid-Lösung möglich, wobei die Konzentration an Alkalichlorid vorzugsweise der des Anolyten entspricht. Die Alkalichlorid-Lösung kann dabei die zu reinigende Alkalichlorid-Lösung sein oder besser eine, die keine organischen Verunreinigungen enthält.

Der anodenseitige Volumenstrom der zu reinigenden chloridhaltigen Lösung beträgt bezogen auf eine geometrische Elektrodenfläche von 100cm² 30 bis 500.000 L/h, insbesondere bei einer Durchströmung bei Einsatz von BDD-Gitterelektroden.

Werden plattenförmige Elektroden eingesetzt, so beträgt die Überströmungsgeschwindigkeit typischerweise von 300 bis 1400cm/s. Eine höhere Überströmungsgeschwindigkeit bzw. ein höherer Volumenstrom ist möglich und für den Organikabbau aufgrund der gesteigerten Turbulenz des zu reinigenden Prozesswassers förderlich.

Bei Einsatz einer geteilten Zelle wird der Katholytvolumenstrom typischerweise 2 bis 5000 L/h bezogen auf eine Elektrodenfläche von 100 cm² betragen, entsprechend einer Lineargeschwindigkeit von ca. 0,01 cm/s bis zu 15 cm/s. Bei größeren Elektrodenflächen ist der Volumenstrom bzw. die sich mit dem Zelldesign daraus ergebende Überströmgeschwindigkeit entsprechend anzupassen

Zur Überwachung des erfindungsgemäßen Reinigungsprozesses kann in einer bevorzugten Ausführung der Erfindung eine Potenzialmessung an der Anode oder an der Kathode oder an beiden Elektroden vorgenommen werden. Dabei wird beispielsweise vor der aktiven Seite der Elektrode eine Luggin-Kapillare positioniert, die eine elektrisch leitende Salzbrücken zu Referenzelektrode z.B. einer reversiblen Wasserstoff Elektrode, RHE, bildet.

Falls in einer bevorzugten Ausführung des neuen Reinigungsverfahrens eine Sauerstoffverzehrkathode eingesetzt wird, wird zusätzlich ein sauerstoffhaltiges Gas benötigt. Der für den einwandfreien Betrieb der Gasdiffusionselektrode notwendige erforderliche Differenzdruck zwischen Gasseite und Elektrolytseite der Gasdiffusionselektrode kann z.B. über den Sauerstoffdruck eingestellt werden. Alternativ hierzu kann auch der Elektrolytdruck verringert werden. Je nach eingesetzter Gasdiffusionselektrode beträgt die Druckdifferenz zwischen Elektrolyt und Gasseite zwischen -20 und + 40 mbar. Hierdurch wird vermieden, dass Gas aus dem Gasraum durch die Sauerstoffverzehrkathode in den Elektrolytraum oder Elektrolyt aus der Elektrolytraum in den Gasraum gelangt.

Die Behandlung der zu reinigenden Chlorid-haltigen Lösung erfolgt bei einer Stromdichte von 1 bis 10 kA/m², wobei das Potenzial der BDD Anode > 2,5V gemessen zur reversen Wasserstoffelektrode (RHE), beträgt. Eine möglichst hohe Stromdichte erhöht die Wirtschaftlichkeit des Reinigungsverfahrens im industriellen Maßstab. Der Volumenstrom des alkalichlorid-haltigen Prozesswassers kann über die Zellgeometrie limitiert sein, d.h. den Elektrodenabstand, die Anoden und Kathodenvolumina, insbesondere jedoch das Anodenvolumen, die Elektrodengeometrie, die Größe der Elektrode und der Druckdifferenz zwischen Anolyteinlass und -auslass.

Je nach Elektrodengröße und -geometrie kann ein einmaliger Durchlauf durch die Zelle ausreichend sein, um den gewünschten Abbau an organischen Verunreinigungen zu erreichen bevorzugt ist ein mehrmaliger Durchlauf. Alternativ können auch die Anodenzonen mehrerer Elektrolysezellen in Reihe hintereinander geschaltet werden, so dass die Reinigung bevorzugt in mehreren seriell nacheinander geschalteten getrennten Anodenzonen durchgeführt wird.

Die Temperatur, bei der die zu reinigende Chlorid-haltigen Lösung der Elektrolyse unterzogen wird, ist bevorzugt die Temperatur, die das chlorid-haltige Prozesswasser aufweist. Besonders bevorzugt beträgt die Temperatur Umgebungstemperatur.

Vor dem Beginn der elektrolytischen Reinigung sollte insbesondere der pH-Wert des anodenberührenden Elektrolyten ausreichend hoch sein, so dass dieser über der gesamten Elektrolysezeit einen pH-Wert (Anolyt) von mindestens pH 11 aufweist. Eine pH Wert Regelung, die im Falle des im Kreis geführten Prozesswassers im Kreislauf, bevorzugt hinter der Zelle angeordnet ist, stellt dabei sicher, dass der pH Wert während der Prozesswasserbehandlung im Sollbereich von mindestens pH 11_bleibt. Die pH Einstellung erfolgt üblicherweise mittels Dosierung von Alkalilauge, insbesondere Natronlauge.

Trotz der hohen Chlorid-Konzentration und des thermodynamisch ausreichenden Potenzials zur Erzeugung von Chlor wird bei dem erfindungsgemäßen Prozess kein Chlor der Oxidationstufe größer oder gleich Null erzeugt. Damit können die Verunreinigungen carbonisiert d.h. z. B. zu Kohlendioxid umgesetzt werden ohne dass dabei chlorierte Produkte der Verunreinigungen entstehen.

Das neue Reinigungsverfahren findet insbesondere Anwendung auf NaCl enthaltendem Prozesswasser aus der Produktion von Polymeren, insbesondere einem Polymer aus der Reihe Polycarbonat, Polyurethanen und deren Vorprodukten, insbesondere von Isocyanaten, besonders bevorzugt von Methylendiphenyldiisocyanat (MDI), Toluol-diisocyanat (TDI), oder aus der Produktion von Farbstoffen, Pflanzenschutzmitteln, pharmazeutischen Verbindungen und deren Vorprodukten ist.

Das neue Reinigungsverfahren kann auch Anwendung finden bei der Reinigung von Prozesswasser aus der Produktion von Epichlorhydrin, das insbesondere Vorprodukt für die Herstellung von Glycerin, Epoxyharzen, Elastomeren und Klebstoffen ist.

Die gereinigte Alkalichloridlösung wird insbesondere zur stofflichen Wiederverwertung von Chlor und Alkalilauge, insbesondere Natronlauge einer Elektrolyse unterzogen. Gegenstand der Erfindung ist folglich auch ein kombiniertes Reinigungsverfahren das gereinigte Prozesswasser anschließend einer Alkalichlorid-Elektrolyse, insbesondere nach dem Membranverfahren, unterzogen wird zur Herstellung von Chlor, Alkalilauge, insbesondere Natronlauge und gegebenenfalls Wasserstoff.

Um betriebliche Stoffkreisläufe zu schließen ist es besonders vorteilhaft, die aus einer nachgeschalteten Alkalichlorid-Elektrolyse erhältlichen Stoffe in vorgelagerten Produktionsprozessen wieder einzusetzen.

Gegenstand der Erfindung ist daher auch ein kombiniertes Reinigungsverfahren, bei dem die aus der der elektrolytischen Reinigung nachgeschalteten Alkalichlorid-Elektrolyse erhältlichen Stoffe Chlor und Alkalilauge, insbesondere Natronlauge und gegebenenfalls Wasserstoff unabhängig von einander in die chemische Produktion von Polymeren, Farbstoffen, Pflanzenschutzmitteln, pharmazeutischen Verbindungen und deren Vorprodukten zurückgeführt werden.

### Beispiele (allgemeine Beschreibung)

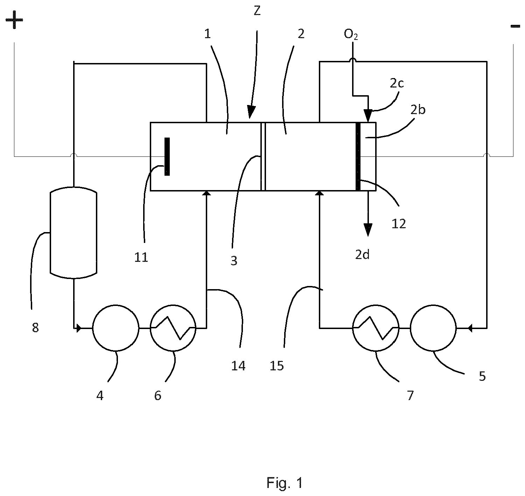

Es wurde eine durch eine Ionenaustauschermembran 3 geteilte Zelle Z eingesetzt, die in Fig.1 schematisch dargestellt ist. Als Anode 11 in einem Anodenraum 1 wurde eine Diachem® Diamantelektrode der Firma Condias (Platten-Elektrode) oder eine Streckgitterelektrode der Fa. DIACCON eingesetzt. Hierbei handelt es sich jeweils um eine Diamantelektrode auf dem Trägermaterial Niob. Die aktive Fläche, gemessen an der lonenaustauschermembran-Fläche der Elektrolysezelle betrug 100 cm². Der Elektrodenabstand betrug 12 mm, resultierend aus 8 mm Abstand zwischen Anode 11 und Membran 3 und 4 mm zwischen Membran 3 und Kathode 12. Als Ionenaustauschermembran 3 wurde eine Membran vom Typ Flemion F-133 der Fa. Asahi Glass eingesetzt. Die Verpressung der Laborzelle erfolgt über sechs Gewindestangen und Muttern (M12), angezogen mit einem definierten Moment von 15 Nm. Die Elektrolyte 14 und 15 wurden jeweils im Kreis geführt. Es wurde jeweils für den Anolyt 14 eine Elektrolytpumpe 4 als auch für den Katholyten 15 eine Pumpe 5 eingesetzt. Der Anolyt 14 wurde mit einem Volumenstrom von 76,8 L/h und der Katholyt 15 mit einem Volumenstrom von 15,0 L/h umgepumpt. Vor jedem Versuch werden beide Kreisläufe über etwa eine Stunde mit VE-Wasser (VE= voll entsalzt) gespült, welches dreimal in der Zeit gewechselt wurde. Nach dem Einfüllen der Elektrolyte 14, 15 wurden diese mit dem genannten Volumenstrom über die Wärmetauscher 6, 7 gepumpt und auf eine Temperatur von 60°C erwärmt. Die Temperaturerfassung erfolgt über die Temperaturfühler (Pt 100) im jeweiligen Kreislauf. Im Kreislauf, kann je nachdem wie die zu reinigende Prozesslösung behandelt werden soll, noch ein Lagerbehälter 8 zur Bevorratung der zu reinigenden Prozesslösung eingesetzt werden.

Als Kathode wurde eine Sauerstoffverzehrkathode (SVK) 12 eingesetzt. Der Kathodenraum 2 wird durch die Sauerstoffverzehrkathode 12 dicht vom Gasraum (2b) getrennt. Zur Inbetriebnahme der Elektrolyse wird reiner Sauerstoff oder ein sauerstoffhaltiges Gas über einen Einlass 2c in den Gasraum 2b eingeleitet. Überschüssiger Sauerstoff / sauerstoffhaltiges Gas gelangt über den Auslass 2d wieder aus dem Gasraum 2b heraus. Durch Anstauung oder mittels einer Flüssigkeitstauchung konnte der Gasstrom, der aus Auslass 2d den Gasraum 2b verlässt angestaut und damit der Druck in der Gaskammer 2b erhöht werden. Vorzugsweise beträgt der Sauerstoffdruck im Gasraum 2b mehr als 20 mbar und je nach Zelldesign bis zu 60mbar erhöht werden. Mögliche Kondensatbildung im Gasraum 2b verursacht z.B. durch Katholytdurchtritt durch die SVK 12 wird aus dem Gasraum 2b mit überschüssigem Gas aus 2d herausgeführt. Mit Erreichen der gewünschten Elektrolyt-Temperatur wird der Gleichrichter (nicht gezeichnet) eingeschaltet und die Stromstärke rampenförmig bis zum gewünschten Betriebsstrom erhöht. Die Gleichrichter werden über ein Mess- und Regelungssystem der Firma Delphin gesteuert. Bei Versuchsbeginn erfolgte Probennahme im Anolyt- und Katholytkreislauf, um den Ausgangs pH-Wert der Lösungen mit einem pH-Meter und zur Kontrolle durch auch durch eine Säure-Base-Titration zu bestimmen. Darüber hinaus erfolgt die Probennahme im Anolytkreislauf in definierten Zeitabständen während der Versuchsdurchführung, um den TOC-Abbau mit der Zeit zu bestimmen. Während des Versuches wurden fortlaufend die Zellspannung, sowie die Anoden- und Kathodenpotentiale gemessen und kontrolliert.

Um den pH-Wert der Elektrolyte einzustellen und den Verlauf während der Versuchsdurchführung zu beobachten, wurde der pH-Wert mittels einem pH-Messgerät der Firma Mettler Toledo (Modell FiveEasy) bestimmt und zur Kontrolle durch eine Säure-Base-Titration überwacht.

Der TOC-Gehalt der Proben wurde mittels eines TOC-Gerätes der Firma Elementar (Modell vario TOC cube) bestimmt. Dabei wurde die Probe mit VE-Wasser um Faktor 5 verdünnt und mit konzentrierter Salzsäure (32 Gew.-%) auf eine pH von 1 eingestellt. Die für die Auswertung der Versuche verwendete Chlor-Analytik ist nachfolgend detailliert beschrieben.

Weiterhin wurde der Anolyt auf das Vorhandensein von Chlor der Oxidationsstufe Null oder größer Null sowie der Chlorid-Konzentration untersucht. Für die Analyse der Chlorid-Konzentration wird auf die Chlorid-Bestimmung nach Mohr zurückgegriffen. Zunächst werden 1 ml der Lösung bei Raumtemperatur entnommen (Eppendorf Pipette), mit 100 ml destilliertem Wasser verdünnt und anschließend ein Spatel Natriumhydrogencarbonat (NaHCO₃) hinzugegeben (pH-Puffer). Im Anschluss erfolgt die Sauerstellung mit 5-10 Tropfen 10%iger Salpetersäure und 5 ml Kaliumchromatlösung werden zugesetzt. Nun wird die Lösung gegen eine 0,1 M Silbernitratlösung (AgNO₃) titriert, bis eine beständige Braunfärbung eintritt. Durch die zutitrierte Silbernitratlösung fällt bis zum Äquivalenzpunkt weißes Silberchlorid aus. Die beständige Braunfärbung entsteht ab dem Äquivalenzpunkt durch die Bildung von schwerlöslichem Silberchromat. Die Konzentration an Natriumchlorid berechnet sich somit aus dem Verbrauch des Silbernitrats.

Die Analyse darauf, ob Chlor der Oxidationsstufe Null und größer Null vorliegt, wird durch die Analyse der Verbindungen Natriumhypochlorit bzw. hypochloriger Säure und Chlorat vorgenommen. Die Analyse von Natriumhypochlorit/Hypochloriger Säure und Chlorat erfolgt durch die Gesamtchlorbestimmung in Bleichlauge. Zunächst wurde 1 ml der Probelösung mit destilliertem Wasser auf 300 ml verdünnt und mit einer Spatelspitze NaHCO₃ versehen. Die Titration erfolgte im Anschluss mit arseniger Säure (0,05 M) als Tüpfelprobe auf Kaliumjodidstärkepapier. In Anwesenheit von Natriumhypochlorit /Hypochloriger Säure, Chlor und Chlorat färbt sich das Kaliumjodidstärkepapier violett, die Titration erfolgte, bis die Tüpfelprobe auf dem Stärkepapier keine Färbung mehr zeigte.

Welcher Anteil des Gesamtchlors in Form von Chlorat vorlag, wurde wie folgt bestimmt: Der Chlorat-Nachweises erfolgt direkt im Anschluss an die Gesamtchlorbestimmung. Für die Bestimmung der Chlorat-Konzentration der Lösung bedarf es zuerst der Bestimmung eines Blindwertes, anschließend der Bestimmung des Probenwertes. Der Blindwert charakterisiert die Chloratmenge der Lösung bevor die Probe hinzugegeben wird. Zunächst wurde der 1 ml Probe 10 ml der schwefelsauren Ammonium-Eisen-(II)-Sulfatlösung (für die Blindwertbestimmung ohne Probe) zugegeben und mit destilliertem Wasser verdünnt. Das Reagenz wurde zum Sieden gebracht und 10 min gekocht. Nach erfolgter Abkühlung wurde sowohl für die Blindwertbestimmung, als auch die Chlorat-Bestimmung mit Kaliumpermanganatlösung (KMnO₄, 0,02 M) bis zur ersten bleibenden Rosafärbung titriert. Beim Chlorat-Nachweis reagiert zunächst das Chlorat mit den Fe²⁺ -Ionen der sauren Lösung, der Überschuss an den Fe²⁺ -Ionen wird anschließend mit Kaliumpermanganatlösung (KMnO₄) oxidiert. Die Konzentration an Chlorat berechnete sich aus dem Verbrauch der Kaliumpermanganatlösung von Probenwert und Blindwert.

Der beschriebene Zellaufbau dient nur der beispielhaften Darstellung des erfindungsgemäßen Verfahrens. Die Prozesswasserbehandlung kann in verschiedenen Zelldesigns mit und ohne den Einsatz einer Gasdiffusionselektrode erfolgen.

### Beispiel 1 - erfindungsgemäß - Formiat Abbau - exemplarisches, nachgestelltes Prozesswasser aus einer Methylendiphenyldiamin (MDA) Herstellung

Eine Laborelektrolysezelle, ausgestattet mit einer Condias Diachem®-Elektrode, wie oben beschrieben, einer Covestro Sauerstoffverzehrkathode und einer Kationenaustauschermembran des Typs Flemion F133, wurde bei einer Stromstärke von 4 kA/m² und entsprechend einer mittleren Spannung von 4 V das zu behandelnde Prozesswasser im Kreislauf durch die Zelle geführt. Der Anolyt bestand aus einer Natriumchlorid-haltige Prozesslösung mit 10 Gew.-% Natriumchlorid und einem pH 14,4. Der Gehalt an Verunreinigung an Natriumformiat betrug als TOC gemessen 24,48 mg/kg. Als Katholyt wurde eine 1 molare Natronlauge eingesetzt.

Während der einstündigen Versuchsdurchführung betrug das Anodenpotential konstant 3,0 V vs. RHE, das mittlere Kathodenpotential 0,6 V vs. RHE. Des weiteren wurde über die Versuchsdurchführung der Organik-Abbau (TOC) gemessen und der Anolyt auf seinen gesamten Chlorgehalt (Natriumhypochlorit, hypochloriger Säure und Chlorat) wie oben beschrieben untersucht.

Der TOC-Gehalt betrug am Anfang 24,48 mg/kg und konnte mit 20 Ah/L vollständig mineralisiert werden, so dass der TOC am Ende des Versuches < 1 mg/kg betrug. Die Bildung von Chlor der Oxidationsstufe Null oder größer als Null anodisch konnte während der gesamten Prozessführung nicht nachgewiesen werden.

### Beispiel 2 - erfindungsgemäß - Phenol- Abbau

Eine 10 Gew.-% ige NaCl-haltige Lösung wurde mit Phenol versetzt, so dass ein TOC von 30,55 mg/kg gemessen wurde. Der pH-Wert der Lösung betrug 14,31. Die Lösung wurde in einer Elektrolysezelle wie in Beispiel 1 beschrieben behandelt. Die Stromdichte wurde auf 3 kA/m²gehalten. Nach der Anwendung von 30 Ah/L betrug der TOC Gehalt nur noch 9 mg/kg. Die Bildung von Chlor der Oxidationsstufe Null oder größer als Null anodisch konnte auch hier nicht nachgewiesen werden.

### Beispiel 3 - erfindungsgemäß - Prozesswasser aus MDA Herstellung-Herstellung

Der Versuch von Beispiel 1 wurde mit einer NaCl-haltigen Lösung aus einer Produktion von MDA durchgeführt. Der pH-Wert der NaCl-haltigen Lösung betrug 14,46. Die Lösung hatte einen Anfangs-TOC Wert von 70 mg/kg und wurde mit einer Stromdichte von 6 kA/m² behandelt. Nach 30 Ah /L betrug der TOC Gehalt nur noch 7 mg/kg.

Auch hier konnte erfolgreich eine Reinigung des Prozesswassers durchgeführt werden, wobei kein Chlor der Oxidationsstufe Null oder größer als Null nachgewiesen wurde.

### Beispiel 4 - erfindungsgemäß - Abbau Katalysator aus Polycarbonat - Ethylpiperidin

Der Versuch aus Beispiel 1 wurde mit Ethylpiperidin als Beispiel für einen Katalysatorrest als organische Verunreinigung in 10 Gew.-% Natriumchlorid-Lösung bei einem pH von 14,38 durchgeführt. Die mittlere Zellspannung betrug bei einer Stromdichte von 4 kA/m² etwa 4,3 V. Der TOC Gehalt zu Beginn der Elektrolyse betrug 28 mg/kg. Nach Anwendung von insgesamt 30 Ah/L betrug der TOC Gehalt nur noch 15 mg/kg. Eine Bildung von Chlor, Hypochlorit oder Chlorat wurde nicht beobachtet.

Der Anolyt wurde nach Versuchsende zusätzlich mittels einer Gerstel PDMS-Twister-Analyse (Absorption an Polydimethylsiloxan und anschließende Desorption mit nachfolgender Gaschromatographie/Massenspektrometrie) untersucht und die im Anolyt enthaltenen organischen Spurenstoffe aufgezeigt und identifiziert. Chlorierte Kohlenwasserstoffe konnten nicht ermittelt werden. Dies beweist dass in Kombination mit dem nicht vorhandenen Chlor der Oxidationsstufe Null und größer Null anodenseitig an der BDD keine Chlorbildung erfolgt.

### Beispiel 5 - Vergleichsbeispiel mit Standard Coating einer Anode aus der Chlor-Alkali-Elektrolyse (DSA-Coating) zu einer BDD-Anode

Der Versuch aus Beispiel 4 wurde mit einer dimensionsstabilen Anode (DSA), die mit einem Coating der Chlor-Alkali-Elektrolyse ausgerüstet war, eingesetzt. Das Coating basierte auf einer Mischung aus Iridiumoxid und Rutheniumoxid der Firma Denora.

Bereits bei der Probenentnahme während der Versuchsdurchführung konnte ein Chlorgeruch wahrgenommen werden. Die Folge der anodischen Chlorbildung ist die Bildung von chlorierten Kohlenwasserstoffen, die über eine Twister-Untersuchung des Anolyts nach Versuchsende bestätigt werden konnte.

### Beispiel 6 - BDD Coating - Vergleichsbeispiel pH < 9,5

Der unter Beispiel 3 beschriebene Versuch wurde wiederholt, jedoch wurde der pH-Wert des Anolyts auf pH 8 eingestellt. Die Versuchsdurchführung erfolgte bei einer Stromdichte von 4 kA/m², eine mittlere Zellspannung von 4,5 V stellte sich ein. Nach Versuchsende konnten ebenfalls chlorierte Kohlenwasserstoffe im Anolyt über eine Twister-Analyse festgestellt werden.

### Beispiel 7 - BDD mit nachgestelltem Prozesswasser

In einer Zelle wie in Beispiel 1 beschrieben, jedoch ausgerüstet mit einer Streckgitter Elektrode der Fa. DIACCON, wurden eine NaCl-haltige Lösung folgender Zusammensetzung als Anolyt eingesetzt: 15 g/L NaCl, 132 mg/kg Formiat, 0,56 mg/ kg, Anilin, 11,6 mg/ kg MDA, 30 mg/ kg Phenol. Der pH-Wert der Lösung betrug 13,4. Der Volumenstrom des Anolyten betrug 121 L/h. Als Katholyt wurde eine 1 molare Natronlauge eingesetzt, die mit einem Volumenstrom von 15 L/h umgepumpt wurde. Die Stromstärke betrug 1 kA/m², die Temperatur 60°C. Der Anfangs-TOC betrug 78 mg/kg. Nach 30 min betrug der pH 13,2 und der TOC-Gehalt nur noch 18 mg/kg. Es wurden zur Reinigung 4 Ah/L an Ladung eingebracht. Die Bildung von Chlor der Oxidationsstufe Null oder größer als Null anodisch konnte nicht nachgewiesen werden.

### Beispiel 8 - MDA Abbau

Eine 10 Gew.-%ige NaCl-haltige Lösung wurde mit 0,45 millimol Methylendiphenyldiamin (MDA) versetzt und die einer Elektrolysezelle wie in Beispiel 1 beschrieben behandelt. Der pH-Wert betrug 14,4, die Stromdichte 5,5 kA/m². Die gelöste Menge an MDA, die einem gemessenen TOC von 25 mg/kg entsprach, wurde bereits vollständig nach 10 Ah/L elektrochemisch mineralisiert. Der TOC-Gehalt der behandelten Lösung betrug 0 mg/kg. Die Bildung von Chlor der Oxidationsstufe Null oder größer als Null anodisch konnte nicht nachgewiesen werden.

### Beispiel 9 pH 7 - Einfluss pH Wert

In einer Zelle wie in Beispiel 1 beschrieben, jedoch ausgerüstet mit einer Streckgitter Elektrode der Fa. DIACCON, wurden eine NaCl-haltige Lösung folgender Zusammensetzung als Anolyt eingesetzt: 15 g/L NaCl, 132 mg/kg Formiat, 0,56 mg/ kg, Anilin, 11,6 mg/ kg MDA, 30 mg/ kg Phenol. Der pH-Wert der Lösung betrug 13,4. Der Volumenstrom des Anolyten betrug 121 L/h. Als Katholyt wurde eine 1 molare Natronlauge eingesetzt, die mit einem Volumenstrom von 15 L/h umgepumpt wurde. Die Stromstärke betrug 1 kA/m², die Temperatur 60°C. Der Anfangs-TOC betrug 78 mg/kg. Nach 20 min betrug der pH 13,4 und der TOC-Gehalt 34 mg/kg. Die Bildung von Chlor der Oxidationsstufe Null oder größer als Null anodisch konnte nicht nachgewiesen werden.

Der pH-Wert wurde daraufhin auf pH 7 erniedrigt. Bereits nach Einbringen von 4 Ah/L konnten 3,5 g/L Chlor der Oxidationsstufe Null oder größer als Null gefunden werden. Der TOC Gehalt wurde dabei nicht erniedrigt.

### Beispiel 10 - Einsatz eines gereinigten MDA Prozesswassers in der Chlor-Alkali-Elektrolysezelle

Es wird Prozesswasser gemäß Beispiel 1 gereinigt und mit festem Natriumchlorid auf eine Konzentration von 17 Gew.-% NaCl eingestellt. Die so erzeugte NaCl-haltige Lösung wird anschließend in einer Laborelektrolysezelle für die Chlor-Alkali-Elektrolyse eingesetzt. Die Elektrolysezelle weist eine Anodenfläche von 0,01m² auf und wird bei einer Stromdichte von 4 kA/m², einer Temperatur im Auslauf Kathodenseite 88°C, einer Temperatur im Auslauf Anodenseite 89°C betrieben. Als Elektroden werden handelsüblich gecoatete Elektroden mit einem Coating für die Chlor-Alkalielektrolyse der Fa. DENORA, Deutschland eingesetzt. Zur Trennung von Anoden - und Kathodenraum wird eine Ionenaustauschermembran der Fa. Chemours N982 WX verwendet. Die Elektrolysespannung beträgt 3,02 V. Durch die Anodenkammer wird eine Natriumchlorid-haltige Lösung mit einem Massenstrom von 0,98 kg/h umgepumpt. Die Konzentration der der Anodenkammer zugeführten Lösung beträgt 25 Gew.-% NaCl. Aus der Anodenkammer kann eine 20 Gew.-%ige NaCl-Lösung entnommen werden. Der aus der Anodenkammer entnommenen NaCl-Lösung werden 0,121 kg/h der 17 Gew.-%igen gereinigten NaCl-haltigen Lösung und weitere 0,0653 kg/h festes Natriumchlorid zugegeben. Die Lösung wird anschließend wieder in die Anodenkammer eingespeist.

Auf der Kathodenseite wird eine Natronlauge mit einem Massenstrom von 1,107 kg/h umgepumpt. Die Konzentration der in die Kathodenseite eingespeisten Natronlauge betrug 30 Gew.-% NaOH, die aus der Kathodenseite entnommene Natronlauge hat eine Konzentration von 32 % NaOH. 0,188 kg/h der 31,9%igen Lauge werden dem Volumenstrom entnommen, der Rest wird mit 0,0664 kg/h Wasser aufgestockt und wieder in das Kathodenelement zurückgeführt.

Ein negativer Einfluss des mittels der BDD-Elektrode von Formiat gereinigten nachgestellten Prozesswassers auf die Performance der Zelle kann nicht beobachtet werden.

## Patentansprüche

1. Verfahren zur elektrochemischen Reinigung von mit organischen chemischen Verbindungen verunreinigten chlorid-haltigen wässrige Prozesslösungen unter Verwendung einer Bor-dotierten Diamantelektrode, **dadurch gekennzeichnet, dass** die Reinigung bei einer Stromdichte von 1 bis 10 kA/m² mit einer Bor-dotierten Diamantelektrode bei einem Potenzial von mehr als 2,5V gemessen gegen die reverse Wasserstoffelektrode (RHE) und einem pH-Wert der Prozesslösung von mindestens pH 11, in der Anodenzone einer Elektrolysezelle bis zu einem vorgegebenen Gesamtgehalt an organischen chemischen Verbindungen (TOC) erfolgt.

2. Verfahren nach Anspruch 1, **dadurch gekennzeichnet, dass** die Reinigung in mehreren Durchläufen der Prozesslösung durch die Anodenzone durchgeführt wird.

3. Verfahren nach Anspruch 1, **dadurch gekennzeichnet, dass** die Reinigung in mehreren seriell nacheinander geschalteten getrennten Anodenzonen durchgeführt wird.

4. Verfahren nach einem der Ansprüche 1 bis 3, **dadurch gekennzeichnet, dass** die Reinigung bis zu einem Gesamtgehalt an organischen chemischen Verbindungen (TOC) von höchstens 500 mg/kg, bevorzugt höchstens 100 mg/kg, besonders bevorzugt höchstens 10 mg/kg erfolgt.

5. Verfahren nach einem der Ansprüche 1 bis 4, **dadurch gekennzeichnet, dass** die Prozesslösung als organisch chemische Verunreinigung organische Lösungsmittel, insbesondere ein oder mehrere aus der Reihe: aliphatische Kohlenwasserstoffe, insbesondere halogenierte aliphatische Kohlenwasserstoffe, insbesondere bevorzugt Dichlormethan, Trichlorethylen, 1,1,1-Trichlorethan, 1,1,2- Trichlorethan und deren Gemische oder aromatische Kohlenwasserstoffe, insbesondere Benzol, Toluol, m/p/o-Xylol oder aromatische Ether wie Anisol, halogenierte aromatische Kohlenwasserstoffe insbesondere Monochlorbenzol und Di-Chlorbenzol enthält.

6. Verfahren nach einem der Ansprüche 1 bis 5, **dadurch gekennzeichnet, dass** die Prozesslösung als organisch chemische Verunreinigung Katalysatorreste, insbesondere eine oder mehrere Verbindungen aus der Reihe: tertiären Amine, insbesondere Triethylamin, Tributylamin, Trioctylamin, N-Ethylpiperidin, N Methylpiperidin, N-i/n-Propylpiperidin; quartäre Ammoniumsalze wie Tetrabutylammonium-/Tributylbenzylammonium-/Tetraethylammonium- hydroxid/-chlorid/-bromid/-hydrogen-sulfat/-tetrafluoroborat; sowie die den Ammoniumverbindungen entsprechenden Phosphoniumverbindungen enthält.

7. Verfahren nach einem der Ansprüche 1 bis 5, **dadurch gekennzeichnet, dass** die Prozesslösung als organisch chemische Verunreinigung eine oder mehrere Verbindungen aus der Reihe: Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'-Bis-(hydroxyphenyl)-diisopropylbenzole, sowie deren alkylierte, kernalkylierte und kernhalogenierte Verbindungen enthält.

8. Verfahren nach einem der Ansprüche 1 bis 5, **dadurch gekennzeichnet, dass** die Prozesslösung als organisch chemische Verunreinigung Kresole, insbesondere aus der Vorproduktion für Pflanzenschutzmittel, aufweist.

9. Verfahren nach einem der Ansprüche 1 bis 7, **dadurch gekennzeichnet, dass** die Konzentration der Chlorid-Ionen in der Prozesslösung zu Beginn der Reinigung bis zu 20 Gew.-% , bevorzugt bis zu 15 Gew.-% beträgt.

10. Verfahren nach einem der Ansprüche 1 bis 8, **dadurch gekennzeichnet, dass** die Prozesslösung Chlorid-Ionen aus Alkalichlorid, insbesondere Natriumchlorid, aufweist.

11. Verfahren nach einem der Ansprüche 1 bis 9, **dadurch gekennzeichnet, dass** die Prozesslösung ein Prozesswasser aus der Produktion von Polymeren, insbesondere einem Polymer aus der Reihe Polycarbonat, Polyurethanen und deren Vorprodukten, insbesondere von Isocyanaten, besonders bevorzugt von Methylendiphenyldiisocyanat (MDI), Toluol-diisocyanat (TDI), oder aus der Produktion von Farbstoffen, Pflanzenschutzmitteln, pharmazeutischen Verbindungen und deren Vorprodukten ist.

12. Verfahren nach einem der Ansprüche 1 bis 10, **dadurch gekennzeichnet, dass** die Prozesslösung ein Prozesswasser aus der Produktion von Epichlorhydrin ist, das insbesondere Vorprodukt für die Herstellung von Glycerin, Epoxyharzen, Elastomeren und Klebstoffen ist.

13. Verfahren nach einem der Ansprüche 1 bis 11, **dadurch gekennzeichnet, dass** die Bordotierte Diamantelektrode auf einem Träger mindestens eines Materials ausgewählt aus der Reihe: Tantal, Silizium und Niob, bevorzugt Niob basiert.

14. Kombiniertes Verfahren zur Reinigung von Prozesswasser und Alkalichloridelektrolyse, **dadurch gekennzeichnet, dass** mit organischen chemischen Verbindungen verunreinigte chlorid-haltige wässrige Prozesslösungen in einem Verfahren nach einem der Ansprüche 1 bis 13 gereinigt werden und das gereinigte Prozesswasser anschließend einer Alkalichlorid-Elektrolyse, insbesondere nach dem Membranverfahren, unterzogen wird zur Herstellung von Chlor, Natronlauge und gegebenenfalls Wasserstoff.

15. Verfahren nach Anspruch 14, **dadurch gekennzeichnet, dass** die aus der der elektrolytischen Reinigung nachgeschalteten Alkalichlorid-Elektrolyse erhältlichen Stoffe Chlor und Natronlauge und gegebenenfalls Wasserstoff unabhängig von einander in die chemische Produktion von Polymeren, Farbstoffen, Pflanzenschutzmitteln, pharmazeutischen Verbindungen und deren Vorprodukten zurückgeführt werden.

## Claims

1. Process for the electrochemical purification of chloride-containing aqueous process solutions contaminated with organic chemical compounds using a boron-doped diamond electrode, **characterized in that** the purification is carried out at a current density of 1 to 10 kA/m² using a boron-doped diamond electrode at a potential of more than 2.5 V measured against the reversible hydrogen electrode (RHE) and a pH of the process solution of at least pH 11 in the anode zone of an electrolysis cell to a prescribed total content of organic chemical compounds (TOC).

2. Process according to Claim 1, **characterized in that** the purification is carried out in a plurality of passes of the process solution through the anode zone.

3. Process according to Claim 1, **characterized in that** the purification is carried out in a plurality of separate anode zones connected in series.

4. Process according to any of Claims 1 to 3, **characterized in that** the purification is carried out to a total content of organic chemical compounds (TOC) of not more than 500 mg/kg, preferably not more than 100 mg/kg, particularly preferably not more than 10 mg/kg.

5. Process according to any of Claims 1 to 4, **characterized in that** the process solution contains organic solvents, in particular one or more from the group consisting of: aliphatic hydrocarbons, in particular halogenated aliphatic hydrocarbons, particularly preferably dichloromethane, trichloroethylene, 1,1,1-trichloroethane, 1,1,2-trichloroethane and mixtures thereof, or aromatic hydrocarbons, in particular benzene, toluene, m/p/o-xylene, or aromatic ethers such as anisole, halogenated aromatic hydrocarbons, in particular monochlorobenzene and dichlorobenzene, as organic chemical impurity.

6. Process according to any of Claims 1 to 5, **characterized in that** the process solution contains catalyst residues, in particular one or more compounds from the group consisting of: tertiary amines, in particular triethylamine, tributylamine, trioctylamine, N-ethylpiperidine, N-methylpiperidine, N-i/n-propylpiperidine; quaternary ammonium salts such as tetrabutylammonium/tributylbenzylammonium/tetraeth ylammonium hydroxide/chloride/bromide/hydrogensulfate/tetrafl uoroborate; and the phosphonium compounds corresponding to the ammonium compounds, as organic chemical impurity.

7. Process according to any of Claims 1 to 5, **characterized in that** the process solution contains one or more compounds from the group consisting of: hydroquinone, resorcinol, dihydroxydiphenyl, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, (α,α'-bis(hydroxyphenyl)diisopropylbenzenes and also alkylated, ring-alkylated and ring-halogenated compounds thereof, as organic chemical impurity.

8. Process according to any of Claims 1 to 5, **characterized in that** the process solution comprises cresols, in particular from preproduction for crop protection agents, as organic chemical impurity.

9. Process according to any of Claims 1 to 7, **characterized in that** the concentration of chloride ions in the process solution at the beginning of the purification is up to 20% by weight, preferably up to 15% by weight.

10. Process according to any of Claims 1 to 8, **characterized in that** the process solution comprises chloride ions from alkali metal chloride, in particular sodium chloride.

11. Process according to any of Claims 1 to 9, **characterized in that** the process solution is a process water from the production of polymers, in particular a polymer from the group consisting of polycarbonate, polyurethanes and precursors thereof, in particular of isocyanates, particularly preferably of methylene diphenyl diisocyanate (MDI), toluene diisocyanate (TDI), or from the production of dyes, crop protection agents, pharmaceutical compounds and precursors thereof.

12. Process according to any of Claims 1 to 10, **characterized in that** the process solution is a process water from the production of epichlorohydrin, which is the intermediate for, in particular, the production of glycerol, epoxy resins, elastomers and adhesives.

13. Process according to any of Claims 1 to 11, **characterized in that** the boron-doped diamond electrode is based on a support composed of at least one material selected from the group consisting of: tantalum, silicon and niobium, preferably niobium.

14. Combined process for purification of process water and alkali metal chloride electrolysis, **characterized in that** chloride-containing aqueous process solutions contaminated with organic chemical compounds are purified in a process according to any of Claims 1 to 13 and the purified process water is subsequently subjected to an alkali metal chloride electrolysis, in particular by the membrane process, in order to produce chlorine, sodium hydroxide and optionally hydrogen.

15. Process according to Claim 14, **characterized in that** the materials chlorine and sodium hydroxide and optionally hydrogen obtainable from the alkali metal chloride electrolysis located downstream of the electrolytic purification are recirculated independently of one another to the chemical production of polymers, dyes, crop protection agents, pharmaceutical compounds and precursors thereof.

## Revendications

1. Procédé pour la purification électrochimique de solutions de procédé aqueuses contenant du chlorure, contaminées par des composés chimiques organiques à l'aide d'une électrode au diamant dopée au bore, **caractérisé en ce que** la purification a lieu à une densité de courant de 1 à 10 kA/m² à l'aide d'une électrode au diamant dopée au bore présentant un potentiel de plus de 2,5 V, mesuré par rapport à l'électrode réversible à hydrogène (RHE) et à un pH de la solution de procédé d'au moins pH 11, dans la zone anodique d'une cellule d'électrolyse jusqu'à une teneur prédéterminée en composés chimiques organiques (TOC).

2. Procédé selon la revendication 1, **caractérisé en ce que** la purification est réalisée en plusieurs passages de la solution de procédé à travers la zone anodique.

3. Procédé selon la revendication 1, **caractérisé en ce que** la purification est réalisée dans plusieurs zones anodiques séparées commutées séquentiellement en série.

4. Procédé selon l'une quelconque des revendications 1 à 3, **caractérisé en ce que** la purification a lieu jusqu'à une teneur totale en composés chimiques organiques (TOC) d'au plus 500 mg/kg, de préférence d'au plus 100 mg/kg, de manière particulièrement préférée d'au plus 10 mg/kg.

5. Procédé selon l'une quelconque des revendications 1 à 4, **caractérisé en ce que** la solution de procédé contient comme contamination chimique organique des solvants organiques, en particulier un ou plusieurs solvants de la série : hydrocarbures aliphatiques, en particulier hydrocarbures aliphatiques halogénés, en particulier de préférence dichlorométhane, trichloroéthylène, 1,1,1-trichloroéthane, 1,1,2-trichloroéthane et leurs mélanges ou hydrocarbures aromatiques, en particulier benzène, toluène, m/p/o-xylène ou éthers aromatiques tels qu'anisol, hydrocarbures aromatiques halogénés, en particulier monochlorobenzène et dichlorobenzène.

6. Procédé selon l'une quelconque des revendications 1 à 5, **caractérisé en ce que** la solution de procédé contient comme contamination chimique organique des restes de catalyseur, en particulier un ou plusieurs composés de la série : amines tertiaires, en particulier triéthylamine, tributylamine, trioctylamine, N-éthylpipéridine, N-méthylpipéridine, N-i/n-propylpipéridine ; sels d'ammonium quaternaire tels qu'hydroxyde/chlorure/bromure/hydrogénosulfate/tétra-fluoroborate de tétrabutylammonium/tributylbenzylammonium/tétraéthylammonium ; ainsi que les composés de phosphonium correspondant aux composés d'ammonium.

7. Procédé selon l'une quelconque des revendications 1 à 5, **caractérisé en ce que** la solution de procédé contient comme contamination chimique organique un ou plusieurs composés de la série : hydroquinone, résorcinol, dihydroxydiphényle, bis-(hydroxyphényl)-alcane, bis-(hydroxyphényl)-cycloalcane, bis-(hydroxyphényl)-sulfure, bis-(hydroxyphényl)-éther, bis-(hydroxyphényl)-cétone, bis-(hydroxyphényl)-sulfone, bis-(hydroxyphényl)-sulfoxyde, (α,α'-bis-(hydroxyphényl)-diisopropylbenzène, ainsi que leurs composés alkylés, à noyau alkylé et à noyau halogéné.

8. Procédé selon l'une quelconque des revendications 1 à 5, **caractérisé en ce que** la solution de procédé contient comme contamination chimique organique des crésols, provenant en particulier de la production en amont d'agents de phytoprotection.

9. Procédé selon l'une quelconque des revendications 1 à 7, **caractérisé en ce que** la concentration en ions chlorure dans la solution de procédé au début de la purification est de jusqu'à 20% en poids, de préférence jusqu'à 15% en poids.

10. Procédé selon l'une quelconque des revendications 1 à 8, **caractérisé en ce que** la solution de procédé présente des ions chlorure provenant de chlorure de métal alcalin, en particulier de chlorure de sodium.

11. Procédé selon l'une quelconque des revendications 1 à 9, **caractérisé en ce que** la solution de procédé est une eau de procédé provenant de la production de polymères, en particulier d'un polymère de la série polycarbonate, polyuréthanes et leurs précurseurs, en particulier d'isocyanates, de manière particulièrement préférée de diisocyanate de diphénylméthylène (MDI), de diisocyanate de toluène (TDI) ou de la production de colorants, d'agents de phytoprotection, de composés pharmaceutiques et de leurs précurseurs.

12. Procédé selon l'une quelconque des revendications 1 à 10, **caractérisé en ce que** la solution de procédé est une eau de procédé provenant de la production de l'épichlorhydrine qui est en particulier un précurseur pour la préparation de glycérol, de résines époxy, d'élastomères et d'adhésifs.

13. Procédé selon l'une quelconque des revendications 1 à 11, **caractérisé en ce que** l'électrode au diamant dopée au bore est à base d'un support en au moins un matériau choisi dans la série : tantale, silicium et niobium, de préférence niobium.

14. Procédé combiné pour la purification d'eau de procédé et d'électrolyse de chlorure de métal alcalin, **caractérisé en ce que** des solutions de procédé aqueuses contenant du chlorure contaminées par des composés chimiques organiques sont purifiées dans un procédé selon l'une quelconque des revendications 1 à 13 et l'eau de procédé purifiée est ensuite soumise à une électrolyse de chlorure de métal alcalin, en particulier selon le procédé par membrane pour la préparation de chlore, de lessive de soude caustique et le cas échéant d'hydrogène.

15. Procédé selon la revendication 14, **caractérisé en ce que** les substances chlore, lessive de soude caustique et le cas échéant hydrogène, pouvant être obtenues à partir de l'électrolyse du chlorure de métal alcalin disposée en aval de la purification électrolytique sont recyclées indépendamment les unes des autres dans la production chimique de polymères, de colorants, d'agents de phytoprotection, de composés pharmaceutiques et de leurs précurseurs.
